# EUROPEAN PATENT APPLICATION

(11) **EP 4 628 983 A1**
(43) Date of publication of application: **08.10.2025**
(21) Application number: 23898373.8
(22) Date of filing: 01.12.2023
(51) Int. Cl.: G03B 5/00, G03B 3/10, G03B 13/34

(54) **CAMERA ACTUATOR**

(30) Priority: 01.12.2022 KR 20220165634; 30.11.2023 KR 20230171271
(71) Applicant: LG INNOTEK CO. LTD, Gangseo-gu Seoul 07796 (KR)
(72) Inventor: LEE, Chung Hui, Seoul 07796 (KR); KIM, Sung Joo, Seoul 07796 (KR)
(74) Representative: DREISS Patentanwälte PartG mbB
(86) International application number: PCT/KR2023/019654
(87) International publication number: WO 2024/117850

(57) **Abstract**

A camera actuator according to the present invention comprises: a housing; a first lens assembly and a second lens assembly disposed inside the housing and arranged in an optical axis direction; and a driving unit for moving the second lens assembly in the optical axis direction, wherein the driving unit includes a first magnet disposed on the second lens assembly and a first coil disposed to face the first magnet, a first reinforcement part protruding in a first direction of facing the first magnet is disposed in the second lens assembly, and the first direction is perpendicular to the optical axis direction.

## Description

### [Technical Field]

The present invention relates to a camera actuator.

### [Background Art]

Cameras are devices which capture photos or videos of subjects and are mounted in portable devices, drones, vehicles, and the like.

Camera devices or camera modules may have an image stabilization (IS) function of correcting or preventing the image shaking caused by a user's movement to improve the quality of the images, an auto-focus function of automatically adjusting a gap between an image sensor and a lens to align the focal length of the lens, and a zoom function of increasing or decreasing the magnification of a distant subject to take a picture using a zoom lens.

Here, as a lens assembly moves in an optical axis direction through electrical interaction in a camera module, a load is applied only to a certain part, such as an upper or lower side due to the weights of lens groups provided in the lens assembly and thus bending of the lens assembly may occur.

There may be problems of the image quality deteriorating or the lens assembly not functioning properly as the light twists and refracts in each lens group during the process in which the light moves through the lens groups.

Accordingly, a means for solving the above problems occurring during the movement of the lens assembly is required.

### [Disclosure]

### [Technical Problem]

The present invention is an invention devised to solve the above-described problems in the related art, and an object of the present invention is to prevent a lens assembly from bending.

The problems to be solved by the present invention are not limited to the above-described problems, and other problems which are not described herein will be clearly understood by those skilled in the art from the description below.

### [Technical Solution]

A camera actuator according to an embodiment of the present invention for achieving the above-described object includes a housing, a first lens assembly and a second lens assembly that are disposed inside the housing and arranged in an optical axis direction, and a driving unit configured to move the second lens assembly in the optical axis direction, wherein the driving unit includes a first magnet disposed on the second lens assembly and a first coil disposed to face the first magnet, a first reinforcement portion protruding in a first direction that faces the first magnet is disposed in the second lens assembly, and the first direction is perpendicular to the optical axis direction.

Here, the first reinforcement portion may include a first member extending in one direction and a second member intersecting the first member.

Also, the first member may extend in the optical axis direction, the second member may extend in a second direction, and the second direction may be perpendicular to the optical axis direction and the first direction.

Furthermore, a thickness of a first intersection portion of the second member that is close to the first member in the optical axis direction may be greater than a thickness of the second member that is relatively far from the first intersection portion in the optical axis direction.

Meanwhile, the second lens assembly may include a second lens group, a second barrel portion surrounding the second lens group, and a first extension portion extending in the first direction from the second barrel portion.

In addition, a first holding portion configured to hold the first magnet may be disposed between the first magnet and the first extension portion.

Moreover, the first reinforcement portion may be disposed between the first holding portion and the first extension portion.

Here, a first fixing portion configured to fix the first holding portion may be disposed in the first extension portion.

Furthermore, the first fixing portion may include a first protruding member and a second protruding member disposed spaced apart from each other in the optical axis direction, and the first protruding member may surround an upper end of the first holding portion in the optical axis direction.

In addition, the second protruding member may surround a part of a lower end of the first holding portion in the optical axis direction.

Meanwhile, the camera actuator further includes a third lens assembly arranged with the first lens assembly and the second lens assembly in the optical axis direction, wherein the driving unit includes a second magnet disposed on the third lens assembly and a second coil disposed to face the second magnet, and a second reinforcement portion protruding in the first direction that faces the second magnet is disposed in the third lens assembly.

At this time, the second reinforcement portion may include a third member extending in one direction and a fourth member intersecting the third member.

Here, the third member may extend in the optical axis direction, the fourth member may extend in the second direction, and the second direction may be perpendicular to the optical axis direction and the first direction.

Also, a thickness of a second intersection portion of the fourth member that is close to the third member in the optical axis direction may be greater than a thickness of the fourth member that is relatively far from the second intersection portion in the optical axis direction.

### [Advantageous Effects]

A camera actuator according to embodiments of the present invention for solving the above problems can have the effect of preventing a lens assembly from bending.

At this time, since a control unit is provided in a space formed by a length difference, the heat generated by the control unit can be efficiently released, and the camera actuator can be miniaturized.

The effects of the present invention are not limited to the effects described above, and other effects which are not described will be clearly understood by those skilled in the art from the description of the claims.

In addition, the effects of the present invention may be described in more detail in the detailed description of the present invention and may not necessarily be limited to the description presented above.

### [Description of Drawings]

The detailed description of preferred embodiments of the present application described below and the summary described above will be better understood when they are read with reference to the attached drawings.

For the purpose of illustrating the present invention, preferred embodiments thereof are shown in the drawings.

However, it should be understood that the present application is not limited to the exact arrangements and means shown.
FIG. 1 is a view for a general description of a camera actuator according to one embodiment of the present invention.
FIG. 2 is an exploded view showing a camera module of the camera actuator according to one embodiment of the present invention.
FIG. 3 is a cross-sectional view along line AA' of the camera module of the camera actuator according to one embodiment of the present invention.
FIG. 4 is a view for describing the overall configuration of the camera actuator according to one embodiment of the present invention.
FIG. 5 is a view for describing the disposition of the camera actuator according to one embodiment of the present invention.
FIG. 6 is a view for describing a second lens assembly of the camera actuator according to one embodiment of the present invention.
FIG. 7 is a view for describing a first holding portion of the camera actuator according to one embodiment of the present invention.
FIG. 8 is a view for describing a first reinforcement portion of the camera actuator according to one embodiment of the present invention.
FIG. 9 is a view for describing a third lens assembly of the camera actuator according to one embodiment of the present invention.
FIG. 10 is a view for describing a second holding portion of the camera actuator according to one embodiment of the present invention.
FIG. 11 is a view for describing a second reinforcement portion of the camera actuator according to one embodiment of the present invention.
FIG. 12 is a view showing a height variation in an optical axis direction of a second lens assembly of a camera actuator according to the related art.
FIG. 13 is a view showing a height variation in an optical axis direction of the second lens assembly of the camera actuator according to one embodiment of the present invention.
FIG. 14 is a view showing a difference in bending deviation amounts between the related art and the present invention according to injection molding simulation.
FIG. 15 is a view showing a graph of a bending deviation according to a distance between the second lens assembly and the third lens assembly.

### [Modes of the Invention]

Since the present invention may have various modifications and embodiments, specific embodiments are illustrated in the drawings and described. Here, this is not intended to limit the present invention to specific embodiments, and it should be understood to include all modifications, equivalents, or substitutes included in the spirit and technical scope of the present invention.

Although terms that include ordinal numbers such as second and first may be used for describing various constituent elements, the constituent elements are not limited by these terms. These terms are used only for distinguishing one constituent element from another. For example, without departing from the scope of the present invention, a second constituent element could be named a first constituent element, and similarly, the first constituent element could also be named the second constituent element. The term and/or includes any combination of a plurality of related described items or any item among the plurality of related described items.

When it is said that a constituent element is "connected" or "coupled" to another constituent element, although it should be understood that it may be directly connected or coupled to that other constituent element, another constituent element may also be present therebetween. On the other hand, when it is said that any constituent element is "directly connected" or "directly coupled" to another constituent element, it should be understood that another constituent element is not present therebetween.

The terminology used in the present application is used only for describing specific embodiments and is not intended to limit the present invention. Singular expressions include plural expressions unless the context clearly indicates otherwise. In the present application, it should be understood that terms such as terms "include" or "have" are intended to specify the presence of a feature, a number, a step, an operation, a constituent element, a part or a combination thereof described in the specification, but do not exclude in advance the possibility of the presence or the addition of one or more of other features, numbers, steps, operations, constituent elements, parts or combinations thereof.

Unless otherwise defined, all terms used herein, including technical or scientific terms, have the same meaning as commonly understood by one of ordinary skill in the art to which this invention belongs. Terms defined in commonly used dictionaries should be interpreted as having a meaning consistent with their meaning in the context of the relevant art, and will not be interpreted in an idealized or overly formal sense, unless expressly defined otherwise in the present application.

Hereinafter, embodiments will be described in detail with reference to the attached drawings. Regardless of the drawing number, the same or corresponding constituent elements are denoted by the same reference numerals and redundant descriptions thereof will be omitted.

Additionally, in this specification, a camera actuator is described as a device that moves a lens, but includes both concepts in which the device includes or does not include a lens. In the following description, first and second camera actuators are described to include a concept in which each of the first and second camera actuators includes a lens. Additionally, the camera actuator that moves a lens may also be referred to as a 'lens movement device' or a 'lens driving device.'

Preferred embodiments of the present invention, in which the purpose of the present invention may be specifically realized, will be described below with reference to the attached drawings.

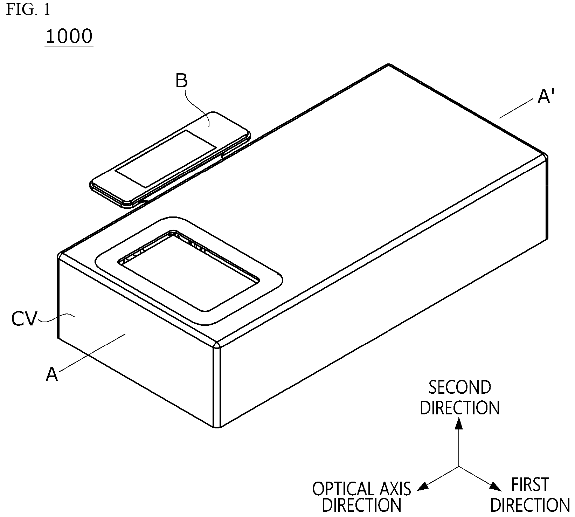

First, before describing a lens assembly according to an embodiment of the present invention, examples and configurations in which the present invention is specifically utilized are generally described with reference to FIGS. 1 to 3.

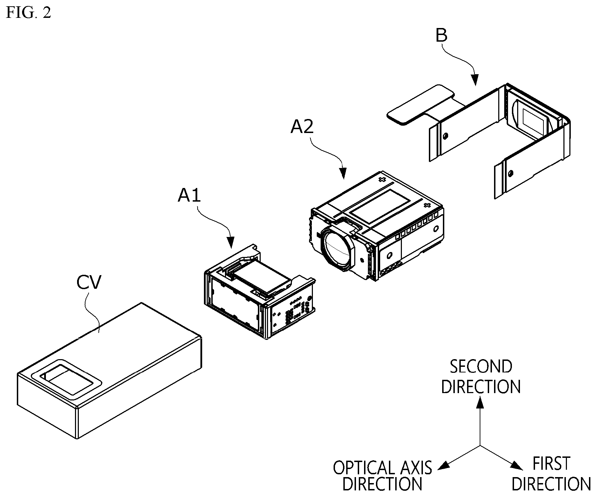

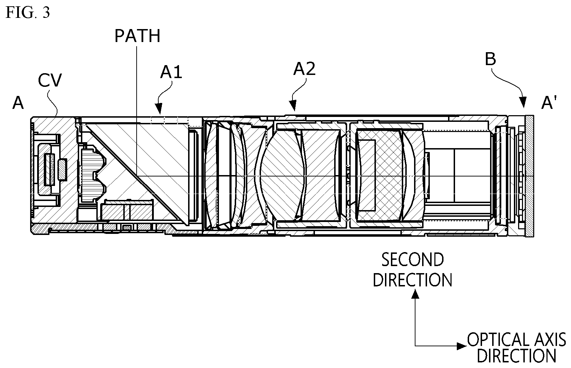

Specifically, FIG. 1 is a view for a general description of a camera actuator according to one embodiment of the present invention, FIG. 2 is an exploded view showing a camera module of the camera actuator according to one embodiment of the present invention, and FIG. 3 is a cross-sectional view along line AA' of the camera module of the camera actuator according to one embodiment of the present invention.

First, referring to FIGS. 1 and 2, a camera module 1000 according to the embodiment may be composed of a cover CV, a first camera actuator A1, a second camera actuator A2, and a circuit board B. Here, the first camera actuator A1 may be used interchangeably with a first actuator and the second camera actuator A2 may be used interchangeably with a second actuator.

The cover CV may cover the first camera actuator A1 and the second camera actuator A2. A coupling force between the first camera actuator A1 and the second camera actuator A2 may be improved by the cover CV.

Furthermore, the cover CV may be made of a material that performs electromagnetic shielding. Thus, the first camera actuator A1 and the second camera actuator A2 in the cover CV may be easily protected.

Further, the first camera actuator A1 may be an optical image stabilization (OIS) actuator. For example, the first camera actuator A1 may move an optical member in a direction perpendicular to an optical axis (axis of incident light).

The first camera actuator A1 may include a fixed focal length lens disposed in a predetermined barrel (not shown). The fixed focal length lens may also be referred to as a "single focal length lens" or a "prime lens."

The first camera actuator A1 may change an optical path. In an embodiment, the first camera actuator A1 may vertically change the optical path through an internal optical member (for example, a prism or a mirror). For example, the optical member may change a direction of light from a second direction to an optical axis direction. With this configuration, a configuration of lenses having sizes greater than a thickness of a mobile terminal may be disposed in the mobile terminal to perform magnification, auto-focus (AF), zoom, and OIS functions, even though the thickness of the mobile terminal is reduced, by changing the optical path.

However, the present invention is not limited thereto and the first camera actuator A1 may change the optical path vertically or at a predetermined angle multiple times.

The second camera actuator A2 may be disposed at a rear end of the first camera actuator A1. The second camera actuator A2 may be coupled to the first camera actuator A1. Further, the first camera actuator A1 and the second camera actuator A2 may be coupled in various ways.

Furthermore, the second camera actuator A2 may be a zoom actuator or an AF actuator. For example, the second camera actuator A2 may support one or a plurality of lenses and move the lenses in response to a control signal from a predetermined control unit to perform an auto-focus function or a zoom function.

Further, one or the plurality of lenses may move independently or individually in the optical axis direction.

The circuit board B may be disposed at a rear end of the second camera actuator A2. The circuit board B may be electrically connected to the second camera actuator A2 and the first camera actuator A1. Moreover, a plurality of circuit boards B may be provided.

The camera module 1000 according to the embodiment may be provided as one or a plurality of camera modules 1000. For example, the plurality of camera modules may include a first camera module and a second camera module.

Further, one camera module 1000 may include one or a plurality of actuators. For example, one camera module 1000 may include the first camera actuator A1 and the second camera actuator A2. Furthermore, the camera module 1000 may be used interchangeably with various terms such as a camera device and an imaging device.

Further, the camera module 1000 may be disposed in a predetermined case (not shown) and may include an actuator (not shown) capable of driving a lens unit. This will be described in more detail with reference to the drawings below.

The actuator may be a voice coil motor, a micro actuator, a silicon actuator, or the like and applied in various ways such as capacitive, thermal, bimorph, and electrostatic methods, but is not limited thereto. In addition, in this specification, the camera actuator may be referred to as an actuator or the like. In addition, the camera module 1000 composed of a plurality of camera modules may be mounted in various electronic devices, such as mobile terminals. Furthermore, the actuator may be a device for moving or tilting a lens and an optical member. However, in the following description, the actuator is described as a concept that includes a lens or an optical member. Furthermore, the actuator may be referred to as a 'lens transfer device,' a 'lens movement device,' an 'optical member transfer device,' an 'optical member movement device,' or the like.

Referring to FIG. 3, the camera module according to the embodiment may include the first camera actuator A1 that performs an OIS function and the second camera actuator A2 that performs zoom and AF functions.

Light may be incident into the camera module 1000 or the first camera actuator A1 through an opening region located in an upper surface of the first camera actuator A1. That is, light may be incident into the first camera actuator A1 in the optical direction, and the optical path may be changed vertically through the optical member. Further, the light may pass through the second camera actuator A2 and may be incident on an image sensor IS located at one end of the second camera actuator A2 (PATH).

Furthermore, in this specification, an inner side may be a side in a direction from the cover CV toward the first camera actuator A1, and an outer side may be a side in a direction opposite to that of the inner side. For example, the first camera actuator A1 and the second camera actuator A2 may be located inside the cover CV, and the cover CV may be located outside the first camera actuator A1 or the second camera actuator A2.

The camera module 1000 according to the embodiment may improve the spatial limitations of the first camera actuator A1 and the second camera actuator A2 by changing the optical path. The camera module 1000 according to the embodiment may expand the optical path while minimizing the thickness of the camera module 1000 in response to a change in the optical path. Furthermore, it should be understood that the second camera actuator A2 can also provide a high range of magnification by controlling a focus or the like in the expanded optical path.

Furthermore, the camera module 1000 according to the embodiment may implement OIS through control of the optical path via the first camera actuator A1, thereby minimizing the occurrence of decentering or tilt phenomena and producing the best optical characteristics.

Furthermore, the second camera actuator A2 may include an optical system and a lens driving portion. For example, at least one of a first lens assembly 200, a second lens assembly 300, and a third lens assembly 400 may be disposed in the second camera actuator A2. This will be described in more detail with reference to the drawings below.

Also, the second camera actuator A2 may include a coil and a magnet to perform a high magnification zoom function and an auto-focus function.

For example, although the second lens assembly 300 and the third lens assembly 400 may be moving lenses that move via coils, magnets, and guide pins, and the first lens assembly 200 may be a fixed lens, the present invention is not limited thereto. For example, the first lens assembly 200 may function as a focator that forms an image by focusing light on a specific position, and have a significant change in magnification due to a significant change in a distance to the subject or an image distance depending on the movement of the second lens assembly 300. Further, the second lens assembly 300, which is a variator, may play an important role in the focal length or magnification change of the optical system. Meanwhile, an image point that is formed in the second lens assembly 300, which is a variator, may vary slightly depending on the location thereof. Thus, the third lens assembly 400 may perform a location compensation function for the image formed by the variator. For example, the third lens assembly 400 may function as a compensator, which functions to accurately form the image point formed in the second lens assembly 300, which is a variator, on an actual position of the image sensor.

Further, the second lens assembly 300 and the third lens assembly 400 may be driven using an electromagnetic force due to the interaction of the coil and the magnet. The above description may be applied to the lens assembly described below. Furthermore, the second lens assembly 300 and the third lens assembly 400 may move in the optical axis direction. Further, the second lens assembly 300 and the third lens assembly 400 may move in the optical axis direction independently or dependently.

Furthermore, the first lens assembly 200 may be located at a front end of the second lens assembly 300 or at a rear end of the third lens assembly 400. That is, the first lens assembly 200 may be located adjacent to the first camera actuator or adjacent to the image sensor. Further, the first lens assembly 200 may be in a fixed state.

In the present invention, the second lens assembly 300 and the third lens assembly 400 may move in the optical axis direction. Further, the first lens assembly 200 may be located at a front end of the second lens assembly 300 or at a rear end of the third lens assembly 400. Further, the first lens assembly 200 may not move in the optical axis direction. That is, the first lens assembly 200 may be a fixed unit. Furthermore, the second and third lens assemblies may be moving units.

Meanwhile, when an actuator for OIS and an actuator for AF/zoom are disposed according to the embodiment of the present invention, magnetic interference with a magnet for AF/zoom may be prevented when driving the OIS. Since the magnet of the first camera actuator A1 is disposed separately from the second camera actuator A2, magnetic interference between the first camera actuator A1 and the second camera actuator A2 may be prevented. In this specification, OIS may be interchangeably used with the terms such as image stabilization, optical image stabilization, optical image correction, and shake correction.

Before describing the lens assembly according to the embodiment of the present invention, the present invention will be described based on the second camera actuator A2, which is only a limited description to help sufficiently understand the invention, and may not necessarily be limited to the illustrated second camera actuator A2.

In addition, although the background as described above, the arrangement relationship in which the components are specifically combined, and the like are described in the detailed description of the present invention to help sufficiently understand the invention, the present invention is not necessarily limited thereto, and it is intended only to help understand the second camera actuator A2 which will be described in detail through the drawings described below.

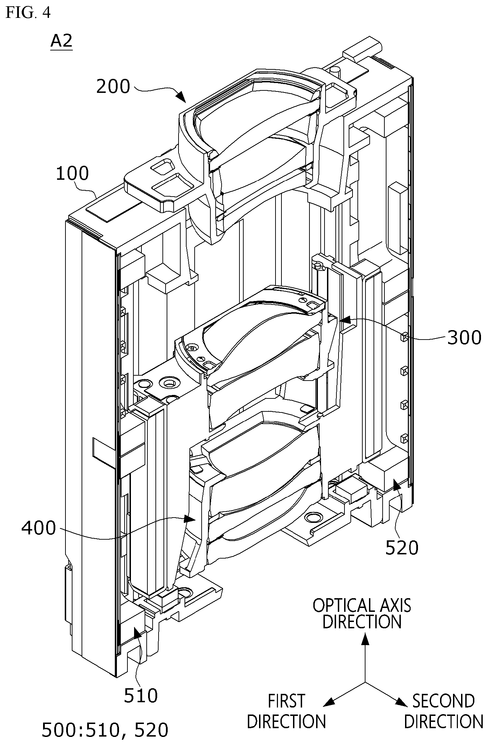

Referring to the background for helping to understand the present invention described above, each configuration and function of the camera actuator according to the embodiment of the present invention may be described with reference to FIGS. 4 to 11.

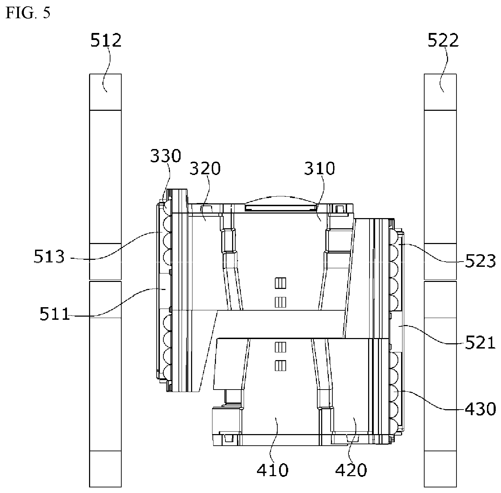

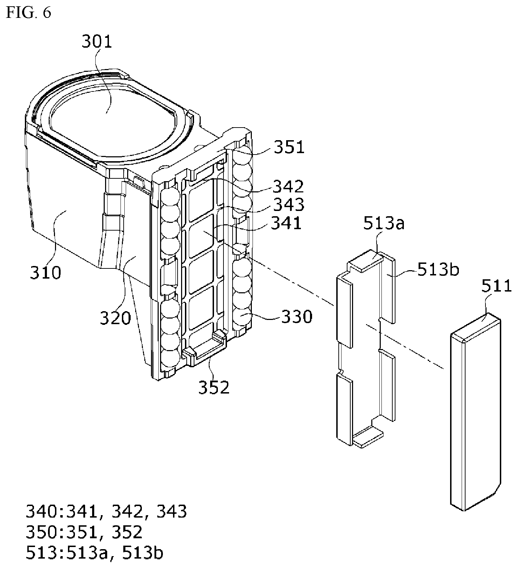

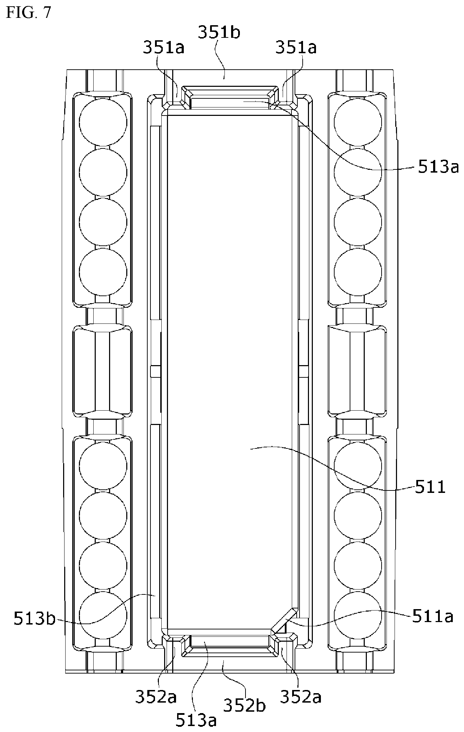

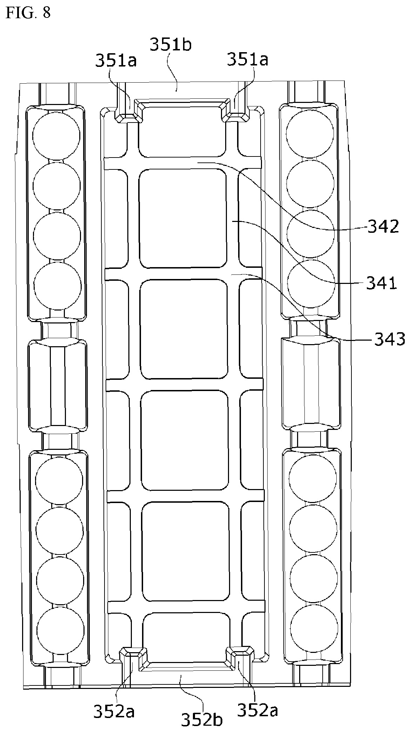

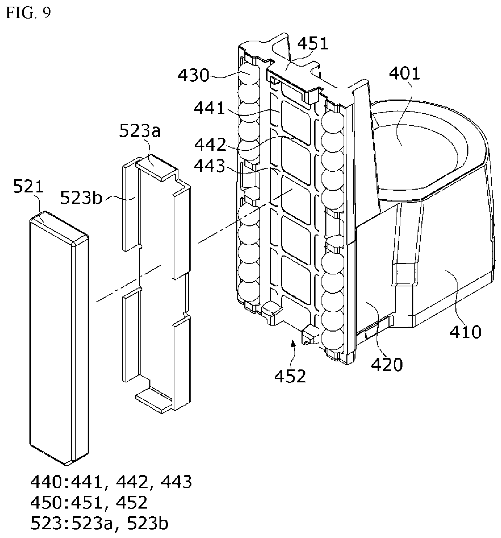

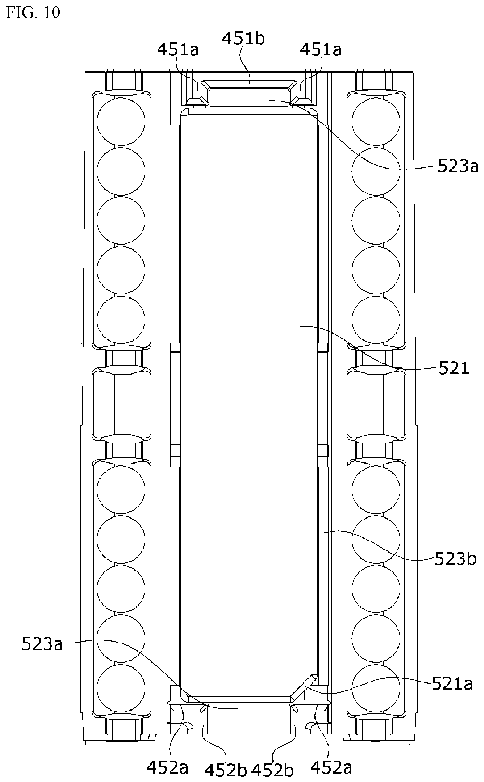

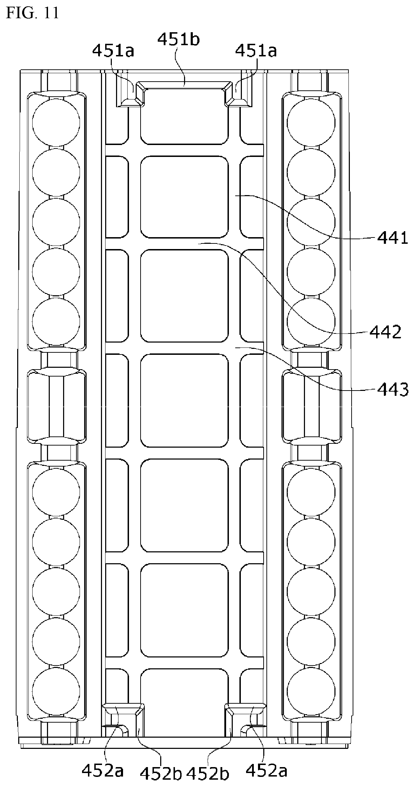

Specifically, FIG. 4 is a view for describing the overall configuration of the camera actuator according to one embodiment of the present invention, FIG. 5 is a view for describing the disposition of the camera actuator according to one embodiment of the present invention, FIG. 6 is a view for describing the second lens assembly of the camera actuator according to one embodiment of the present invention, FIG. 7 is a view for describing a first holding portion of the camera actuator according to one embodiment of the present invention, FIG. 8 is a view for describing a first reinforcement portion of the camera actuator according to one embodiment of the present invention, FIG. 9 is a view for describing the third lens assembly of the camera actuator according to one embodiment of the present invention, FIG. 10 is a view for describing a second holding portion of the camera actuator according to one embodiment of the present invention, and FIG. 11 is a view for describing a second reinforcement portion of the camera actuator according to one embodiment of the present invention.

First, as shown in FIG. 4, the camera actuator according to the embodiment of the present invention may include a housing 100, the first lens assembly 200, the second lens assembly 300, the third lens assembly 400, and a driving unit 500 including a first driving portion 510, and a second driving portion 520.

Here, the housing 100 may form the exterior of the camera actuator according to the embodiment of the present invention and have a space formed therein.

In addition, the second lens assembly 300 and the third lens assembly 400 may be located inside the housing 100 and may move in the optical axis direction by the first driving portion 510 and the second driving portion 520, and the first lens assembly 200 may be fixed to the outer side of the housing 100.

At this time, the first lens assembly 200 may be fixed to the outer side of the housing 100, and a separate cover member may be provided between the first lens assembly 200 and the housing 100, but is limited thereto.

Meanwhile, the second lens assembly 300 and the third lens assembly 400 may move in the optical axis direction by the driving unit 500 including the first driving portion 510 and the second driving portion 520.

Here, the first driving portion 510 may include a first magnet 511 provided on the second lens assembly 300 and a first coil 512 provided to face the first magnet 511 in a first direction as shown in FIG. 5.

Accordingly, the second lens assembly 300 may move in the optical axis direction by the electrical interaction between the first magnet 511 and the first coil 512.

Meanwhile, the second driving portion 520 may include a second magnet 521 provided on the third lens assembly 400 and a second coil 522 provided to face the second magnet 521 in the first direction.

Accordingly, the third lens assembly 400 may move in the optical axis direction by the electrical interaction between the second magnet 521 and the second coil 522.

At this time, the optical axis direction may mean a direction of the optical path through which light passes through the first camera actuator and is incident on the second camera actuator, and the first direction may mean both a direction that is perpendicular to the optical path and from the first coil 512 toward the second coil 522 and a direction that is perpendicular to the optical path and from the second coil 522 toward the first coil 512.

Additionally, the second direction may mean a direction that is perpendicular to the first direction and perpendicular to the optical axis direction, which is the optical path.

That is, the second direction may mean both a direction from a front surface toward a rear surface and a direction from the rear surface toward the front surface based on the housing 100, and the optical axis direction, the first direction, and the second direction may be perpendicular to each other.

Meanwhile, the first lens assembly 200 may be fixed to the outer side of the housing 100, may include a first lens group and a first barrel portion, and may include a wing portion extending in the first direction from the first barrel portion.

Here, the first lens group may mean a set of a plurality of lenses, the plurality of lenses may be arranged in the optical axis direction, and the first barrel portion may be provided to surround the first lens group. That is, a position of the first lens group may be fixed by the first barrel portion.

In addition, the wing portion may extend from the circumference of the first barrel portion in the first direction, and the wing portion may include a first panel extending in the first direction where the first coil 512 is located and a second panel extending in the first direction where the second coil 522 is located.

That is, the first panel and the second panel may extend away from each other in the first direction of the circumference of the first barrel portion.

At this time, the first panel and the second panel may be in contact with the housing 100, or each of the first panel and the second panel may be attached or fixed to the housing 100 through a separate member, but may not necessarily be limited thereto.

Meanwhile, the second lens assembly 300 and the third lens assembly 400 may be provided between the first coil 512 and the second coil 522 or between the first magnet 511 and the second magnet 521, the first coil 512 and the first magnet 511 may move the second lens assembly 300 in the optical axis direction through electrical interaction, and the second coil 522 and the second magnet 521 may move the third lens assembly 400 in the optical axis direction through electrical interaction.

In addition, a first ball unit 330 may be provided on the second lens assembly 300, a plurality of first ball units 330 may be disposed, and the first ball units 330 may be arranged in the optical axis direction. Additionally, the first ball units 330 may be disposed spaced apart from each other in the second direction.

That is, the first ball units 330 may be spaced apart with the first magnet 511 disposed therebetween and arranged in the optical axis direction.

In addition, a second ball unit 430 may be provided on the third lens assembly 400, a plurality of second ball units 430 may be disposed, and the second ball units 430 may be arranged in the optical axis direction. Additionally, the second ball units 430 may be disposed spaced apart from each other in the second direction.

That is, the second ball units 430 may be spaced apart with the second magnet 521 disposed therebetween and arranged in the optical axis direction.

Here, the second lens assembly 300 may include a second lens group 301, a second barrel portion 310, and a first extension portion 320 as shown in FIG. 6.

At this time, the second lens group 301 may mean a group in which a plurality of lenses are arranged in the optical axis direction, and the second barrel portion 310 may be provided in a form that surrounds the second lens group 301.

Additionally, the first extension portion 320 may extend in the first direction away from the second lens group 301 in the second barrel portion 310 and may extend obliquely in a direction away from the first lens assembly 200. In addition, first rail grooves spaced apart in the second direction with the first magnet 511 disposed therebetween may be provided in the first extension portion 320, and the first ball units 330 may be disposed in the first rail grooves.

In addition, a first seating space in which the first magnet 511 is disposed may be provided between the first rail grooves, and first fixing portions 350 may be provided at one end and the other end of the first seating space in the optical axis direction.

Here, a first reinforcement portion 340 may be provided in the first seating space, and the first reinforcement portion 340 may protrude from the second lens assembly 300 in a direction that faces the first magnet 511. Specifically, the first reinforcement portion 340 may protrude from the first extension portion 320 in the direction that faces the first magnet 511.

At this time, the first extension portion 320 may include a first member 341 extending in the optical axis direction and a second member 342 extending in the second direction, and the first member 341 and the second member 342 may extend to intersect each other.

However, since the first member 341 and the second member 342 extend in the optical axis direction and the second direction, respectively, the first member 341 and the second member 342 may be perpendicular to each other, but may intersect each other without being perpendicular as necessary, and are not necessarily limited thereto. In addition, a surface between the first member 341 and the second member 342 of a first intersection portion 343 where the first member 341 and the second member 342 intersect may be provided in a curved shape.

Meanwhile, a first holding portion 513 may be provided between the first magnet 511 and the first extension portion 320 so that the first magnet 511 is attached to the first seating space, and the first holding portion 513 may be attached to the first seating space by applying a separate adhesive member, for example, a material such as epoxy, but may not necessarily be limited thereto.

At this time, the first holding portion 513 may include first wall portions 513a that fix upper and lower ends of the first magnet 511 in the optical axis direction and second wall portions 513b that hold the first magnet 511 in the second direction. That is, a pair of first wall portions 513a may be provided to hold the upper and lower ends of the first magnet 511 in the optical axis direction, and a pair of second wall portions 513b may be provided to hold left and right sides of the first magnet 511 in the second direction.

Additionally, the second wall portions 513b may be provided to be spaced apart from each other in the optical axis direction as needed.

In addition, the first fixing portion 350 may include a first protruding member 351 that holds the upper end of the first magnet 511 in the optical axis direction and a second protruding member 352 that holds the lower end of the first magnet 511 in the optical axis direction.

When describing this in more detail, as shown in FIG. 7, the first magnet 511 may be inserted into a space provided by the first wall portions 513a and the second wall portions 513b and fixed by the first protruding member 351 and the second protruding member 352.

More specifically, the first protruding member 351 may include first partition walls 351a that extend in the optical axis direction and are in contact with the first wall portion 513a and a first bar portion 351b that extends in the second direction and is connected to the first partition walls 351a, a pair of first partition walls 351a may be provided spaced apart from each other in the second direction, and the first partition walls 351a may be provided at both end portions of the first bar portion 351b, respectively.

Accordingly, an inner space may be formed by the pair of first partition walls 351a and the first bar portion 351b, and the first wall portion 513a may be inserted into the inner space to fix an upper end of the first holding portion 513.

In addition, the second protruding member 352 may include second partition walls 352a that extend in the optical axis direction and are in contact with the first wall portion 513a and a second bar portion 352b that extends in the second direction and is connected to the second partition walls 352a, a pair of second partition walls 352a may be provided spaced apart from each other in the second direction, and the second partition walls 352a may be provided at both end portions of the second bar portion 352b, respectively.

Accordingly, an inner space may be formed by the pair of second partition walls 352a and the second bar portion 352b, and the first wall portion 513a may be inserted into the inner space to fix a lower end of the first holding portion 513.

Meanwhile, a first inclined surface 511a may be provided on the first magnet 511, and the first inclined surface 511a may be provided at one or more of the vertices of the first magnet 511.

At this time, the first inclined surface 511a may be provided to confirm the polarity of the first magnet 511 or to confirm the direction during the process in which the first magnet 511 is seated in the first holding portion 513, but may not necessarily be limited thereto.

Meanwhile, the first reinforcement portion 340 is described in more detail with reference to FIG. 8.

Specifically, as shown in FIG. 8, the first reinforcement portion 340 may include the first member 341, the second member 342, and the first intersection portion 343, and the first member 341 and the second member 342 may intersect each other to form the first intersection portion 343.

This has the effect of preventing the first extension portion 320 from being bent by the weight of the second lens group 301 or other factors by forming the first members 341 long in the optical axis direction. In addition, the first member 341 may secure rigidity in the optical axis direction, and the second member 342 may intersect the first member 341 to secure rigidity in the second direction.

In addition, since the first intersection portion 343 formed by the first member 341 and the second member 342 intersecting each other is formed to be relatively thicker than a width of the first members 341 and a width of the second members 342, the effect of further increasing the relative rigidity may be achieved.

When it is described in another way, a thickness of the second member 342 in the optical axis direction at a portion thereof relatively spaced apart from the first member 341 may be smaller than a thickness of the second member 342 in the optical axis direction close to the first member 341, and a portion where the first member 341 and the second member 342 intersect at the first intersection portion 343 may be formed with a curved surface to effectively secure rigidity.

In addition, a plurality of first members 341 may be disposed spaced apart from each other in the second direction, and a plurality of second members 342 may be disposed spaced apart from each other in the optical axis direction.

Here, a separation distance between the first members 341 and a separation distance between the second members 342 may be the same, and this may be because it is effective for securing rigidity in a square shape, but it may not necessarily be limited thereto.

Meanwhile, a distance between facing inner surfaces of the first partition walls 351a may be relatively narrower than a distance between facing inner surfaces of the first members 341. This may have the effect of preventing a load from occurring due to a decrease in productivity and an increase in relative load when the distance between the inner surfaces of the first members 341 is narrower than the distance between the inner surfaces of the first partition walls 351a.

In addition, among the plurality of second members 342, the second member 342 at the uppermost end in the optical axis direction and the second member 342 at the lowermost end may be spaced apart from the first protruding member 351 and the second protruding member 352, respectively, and this may have the effect of preventing the problem that an area in which the first holding portion 513 comes into contact with the first reinforcement portion 340 is relatively small due to the second member 342.

For example, when the first partition wall 351a and the second member 342 are disposed adjacent to each other, the problems that a space between the first partition wall 351a and the second member 342 may be narrow, making it somewhat difficult to apply an adhesive member, or the first wall portion 513a may be detached from the inner space formed by the pair of first partition walls 351a and the first bar portion 351b due to the manufacturing tolerance of the second member 342 may occur. Thus, as described above, it may be preferable for the second member 342 to be spaced a predetermined distance apart from the first protruding member 351 and the second protruding member 352 in the optical axis direction.

Meanwhile, the third lens assembly 400 may include a third lens group 401, a third barrel portion 410, and a second extension portion 420 as shown in FIG. 9.

At this time, the third lens group 401 may mean a group in which a plurality of lenses are arranged in the optical axis direction, and the third barrel portion 410 may be provided in a form that surrounds the third lens group 401.

Additionally, the second extension portion 420 may extend from the third barrel portion 410 in the first direction away from the third lens group 401, and may extend obliquely in a direction approaching the first lens assembly 200. In addition, second rail grooves spaced apart in the second direction with the second magnet 521 disposed therebetween may be provided in the second extension portions 420, and the second ball units 430 may be disposed in the second rail grooves.

In addition, a second seating space in which the second magnet 521 is disposed may be provided between the second rail grooves, and second fixing portions 450 may be provided at one end and the other end of the second seating space in the optical axis direction.

Here, a second reinforcement portion 440 may be provided in the second seating space, and the second reinforcement portion 440 may protrude from the third lens assembly 400 in a direction that faces the second magnet 521. Specifically, the second reinforcement portion 440 may protrude from the second extension portion 420 in the direction that faces the second magnet 521.

At this time, the second extension portion 420 may include a third member 441 extending in the optical axis direction and a fourth member 442 extending in the second direction, and the third member 441 and the fourth member 442 may extend to intersect each other.

However, the third member 441 and the fourth member 442 extend in the optical axis direction and the second direction, respectively, and thus may be perpendicular to each other, but may also intersect each other without being perpendicular as necessary, and are not necessarily limited thereto. Furthermore, a surface between the third member 441 and the fourth member 442 of a second intersection portion 443 where the third member 441 and the fourth member 442 intersect may be provided to have a curved shape.

Meanwhile, a second holding portion 523 may be provided between the second magnet 521 and the second extension portion 420 so that the second magnet 521 is attached to the second seating space, and the second holding portion 523 may be attached to the second seating space by applying a separate adhesive member, for example, a material such as epoxy, but may not necessarily be limited thereto.

At this time, the second holding portion 523 may include third wall portions 523a that fix upper and lower ends of the second magnet 521 in the optical axis direction and fourth wall portions 523b that hold the first magnet 511 in the second direction. That is, a pair of third wall portions 523a may be provided to hold the upper and lower ends of the second magnet 521 in the optical axis direction, and a pair of fourth wall portions 523b may be provided to hold left and right sides of the second magnet 521 in the second direction.

Additionally, the fourth wall portions 523b may be provided to be spaced apart from each other in the optical axis direction as needed.

In addition, the second fixing portions 450 may include a third protruding member 451 that holds the upper end of the second magnet 521 in the optical axis direction and a fourth protruding member 452 that holds the lower end of the second magnet 521 in the optical axis direction.

When this is described in more detail, as shown in FIG. 10, the second magnet 521 may be inserted into a space provided by the third wall portions 523a and the fourth wall portions 523b and fixed by the third protruding member 451 and the fourth protruding member 452.

More specifically, the third protruding member 451 may include third partition walls 451a that extend in the optical axis direction and are in contact with the third wall portion 523a and a third bar portion 451b that extends in the second direction and is connected to the third partition walls 451a, a pair of third partition walls 451a may be provided spaced apart from each other in the second direction, and the third partition walls 451a may be provided at both end portions of the third bar portion 451b.

Accordingly, an inner space may be formed by the pair of third partition walls 451a and the third bar portion 451b, and the third wall portion 523a may be inserted into the inner space to fix an upper end of the second holding portion 523.

In addition, the fourth protruding member 452 may include support surfaces 452a that extend in the second direction and are contact with the second magnet 521 and bent surfaces 452b that extend away from the second magnet 521 in the optical axis direction and are contact with the third partition wall 451a, a pair of support surfaces 452a may provided spaced apart from each other in the second direction, and each of the bent surfaces 452b may be provided at one end portion of the support surface 452a.

Accordingly, an inner space may be formed by the pair of bent surfaces 452b, and the third wall portion 523a may be inserted into the inner space to fix a lower end of the second holding portion 523.

Additionally, the support surfaces 452a may be disposed to be in contact with the second magnet 521 between the third wall portions 523a and the fourth wall portions 523b to support the second magnet 521.

Meanwhile, a second inclined surface 521a may be provided on the second magnet 521, and the second inclined surface 521a may be provided at one or more of the vertices of the second magnet 521.

At this time, the second inclined surface 521a may be provided to confirm the polarity of the second magnet 521 or to confirm the direction during the process in which the second magnet 521 is seated in the second holding portion 523, but may not necessarily be limited thereto.

Meanwhile, the second reinforcement portion 440 is described in more detail with reference to FIG. 11.

Specifically, as shown in FIG. 11, the second reinforcement portion 440 may include the third members 441, the fourth members 442, and the second intersection portions 443, and the third members 441 and the fourth members 442 may intersect each other to form the second intersection portions 443.

This has the effect of preventing the second extension portion 420 from being bent by a weight of the third lens group 401 or other factors by forming the third members 441 long in the optical axis direction. In addition, the third member 441 may secure rigidity in the optical axis direction, and the fourth member 442 may intersect the third member 441 to secure rigidity in the second direction.

In addition, since the second intersection portion 443 formed by the third member 441 and the fourth member 442 intersecting each other may be formed to be relatively thicker than a width of the third member 441 and a width of the fourth member 442, the effect of further increasing the relative rigidity may be achieved.

When it is described in another way, a thickness of a portion of the fourth member 442 that is relatively spaced apart from the third member 441 in the optical axis direction may be smaller than a thickness of the fourth member 442 adjacent to the third member 441 in the optical axis direction, and a portion where the third member 441 and the fourth member 442 intersect at the second intersection portion 443 may be formed with a curved surface to effectively secure rigidity.

In addition, a plurality of third members 441 may be disposed spaced apart from each other in the second direction, and a plurality of fourth members 442 may be disposed spaced apart from each other in the optical axis direction.

Here, a separation distance between the third members 441 and a separation distance between the fourth members 442 may be the same, and this may be because it is effective for securing rigidity in a square shape, but it may not necessarily be limited thereto.

Meanwhile, a distance between facing inner surfaces of the third partition walls 451a may be relatively narrower than a distance between facing inner surfaces of the third members 441. In addition, this may have the effect of preventing a load from occurring due to a decrease in productivity and an increase in relative load when the distance between the inner surfaces of the third members 441 is narrower than the distance between the inner surfaces of the third partition walls 451a.

In addition, among the plurality of fourth members 442, the fourth member 442 at the uppermost end in the optical axis direction and the fourth member 442 at the lowermost end may be spaced apart from the third protruding member 451 and the fourth protruding member 452, respectively, and this may have the effect of preventing the problem that an area in which the second holding portion 523 comes into contact with the second reinforcement portion 440 is relatively small due to the fourth member 442.

For example, when the third partition wall 451a and the fourth member 442 are disposed adjacent to each other, a space between the third partition wall 451a and the fourth member 442 may be narrow, making it somewhat difficult to apply an adhesive member, or the third wall portion 523a may be detached from an inner space formed by the pair of third partition walls 451a and the third bar portion 451b due to the manufacturing tolerance of the fourth member 442. Thus, as described above, it may be preferable for the fourth member 442 to be spaced a predetermined distance from the third protruding member 451 and the fourth protruding member 452 in the optical axis direction.

As described above, the camera actuator according to the embodiment of the present invention may be provided with the first reinforcement portion 340 to secure the rigidity of the first extension portion 320 that is subject to bending due to the weight of the second lens group 301 or an external factor, and the second reinforcement portion 440 to secure the rigidity of the second extension portion 420 that is subject to bending due to the weight of the third lens group 401 or an external factor.

Accordingly, the rigidity of the first extension portion 320 of the second lens assembly 300 may be secured, and the rigidity of the second extension portion 420 of the third lens assembly 400 may be secured so that there may be an advantage of effectively preventing the first extension portion 320 and the second extension portion 420 from bending.

In addition, the first reinforcement portion 340 and the second reinforcement portion 440 may protrude to have a height of 0.01 to 0.03 mm in the first direction, which have the advantage of sufficiently securing the rigidity of the second lens assembly 300 and the third lens assembly 400 without excessively increasing the load, and preventing the problem in which a size of the housing 100 increases in the first direction by introducing a separate reinforcement member.

More specifically, the first reinforcement portion 340 may have a height of 0.01 to 0.03 mm in the first direction, preferably 0.02 mm, and a width of the first member 341 in the second direction and a width of the second member 342 in the optical axis direction may be 0.1 to 0.3 mm, preferably 0.02 mm.

In addition, the second reinforcement portion 440 may have a height of 0.01 to 0.03 mm in the first direction, preferably 0.02 mm, and a width of the third member 441 in the second direction and a width of the fourth member 442 in the optical axis direction may be 0.1 to 0.3 mm, preferably 0.02 mm.

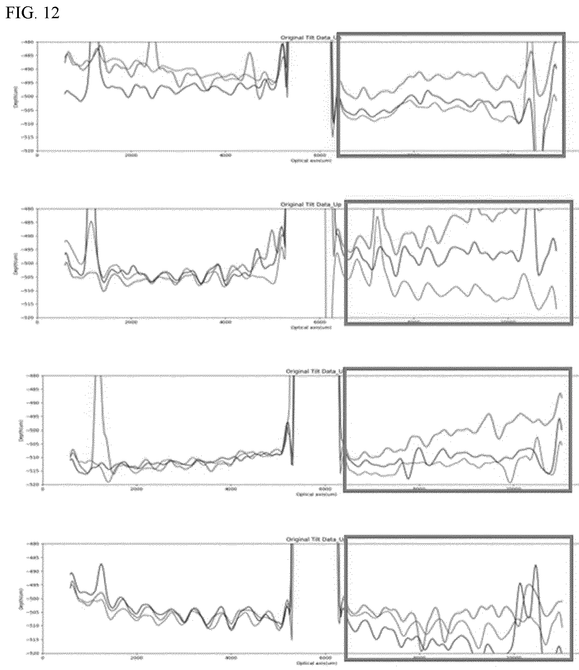

Meanwhile, the differences from the related art by providing the first reinforcement portion 340 and the second reinforcement portion 440 in the second actuator A2 according to the embodiment of the present invention described above are described with reference FIGS. 12 to 15.

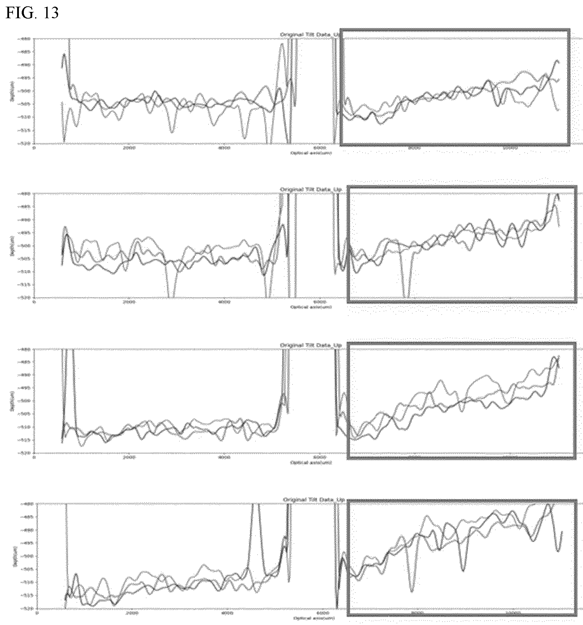

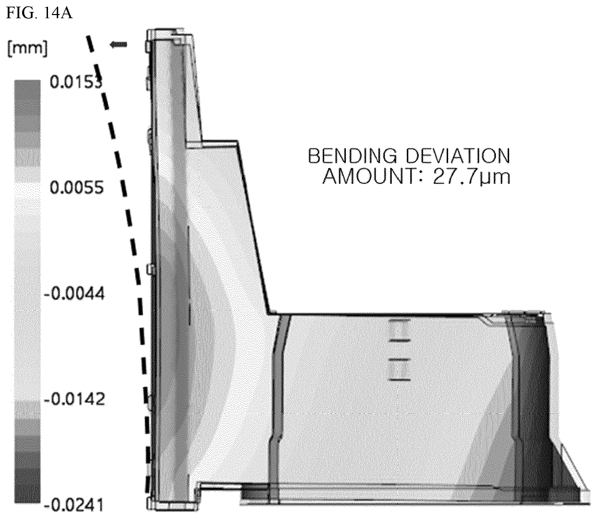

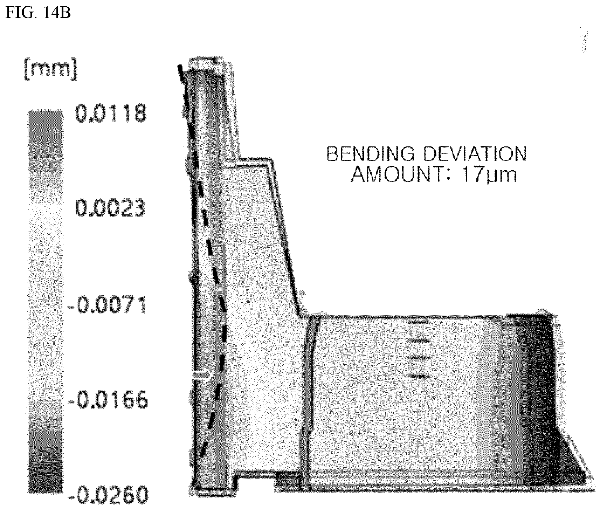

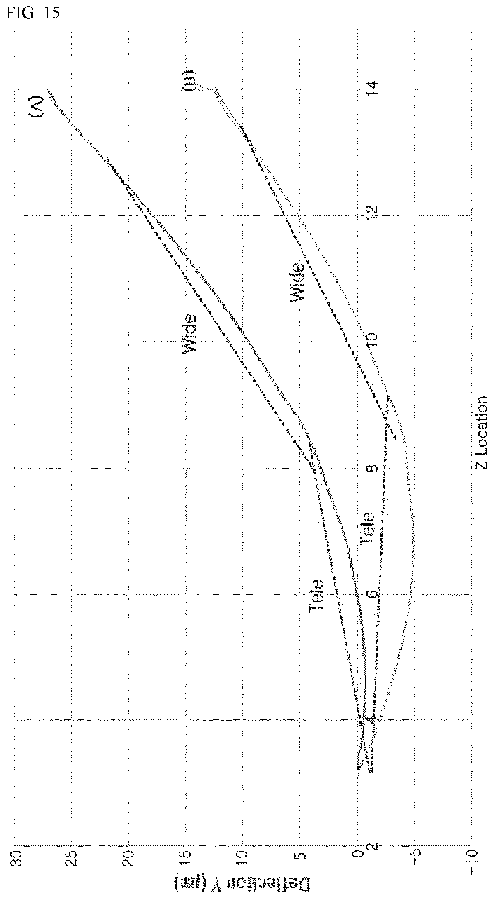

Specifically, FIG. 12 is a view showing a height variation in the optical axis direction of the second lens assembly of a camera actuator according to the related art, FIG. 13 is a view showing a height variation in the optical axis direction of the second lens assembly of the camera actuator according to one embodiment of the present invention, FIG. 14 is a view showing a difference in bending deviation amounts between the related art and the present invention according to injection molding simulation, and FIG. 15 is a view showing a graph of a bending deviation according to a distance between the second lens assembly and the third lens assembly.

First, in comparing the camera actuator according to the related art and the camera actuator according to the embodiment of the present invention, variation ranges of FIGS. 12 and 13 are views showing a change in height in the optical axis direction of the first extension portion 320 over time, and the multiple lines represent an injection-molded article state, a state in which a magnet is attached, and a state after 10 hours of curing.

In addition, the X-axis of FIGS. 12 and 13 represents a height (optical axis) of the first extension portion 320 in the optical axis direction and the Y-axis represents a depth (depth) of the first rail groove in the first direction, and more specifically, a distance from a bottom surface of the first extension portion 320 to an upper surface thereof in the optical axis direction may be the X-axis, and a distance from an inner surface of the first rail groove in the first direction to a surface of the first extension portion 320 that is farthest from the inner surface of the first rail groove in the first direction may be the Y-axis.

In addition, the four graphs shown in FIGS. 12 and 13 are drawings showing the bending deviation for different models according to the conditions described above.

Based on the conditions described above, referring to FIG. 12, as shown in FIG. 12, the camera actuator according to the related art has a significant bending deviation depending on an injection molding method and a length of the first extension portion 320 in the optical axis direction, and as described above, this may cause a problem of overload due to the stability of the camera actuator and the first ball units 330 disposed on the first extension portion 320 being pressurized at different pressures.

Of course, since the bending deviation of the conventional first extension portion 320 is large, the problems with the stability and performance deterioration of the camera actuator itself may also occur.

In addition, since the bending deviation is significant for each model, even when a certain model is relatively stable compared to another model, still another model may be relatively unstable compared to other models. Thus, there may be problems that performance is prevented from being standardized.

Meanwhile, as shown in FIG. 13, it can be confirmed that the camera actuator according to the embodiment of the present invention has significantly secured stability compared to the related art shown in FIG. 12, even when examining the bending deviation according to different models or the change according to the measurement situation.

As described above, this may have the advantage of significantly reducing the bending deviation of the first extension portion 320, thereby reducing the friction deviation occurring in the first ball units 330, and also preventing problems such as overloading or wear occurring due to this.

That is, as described above, it can be confirmed that the second lens assembly 300 of the present invention in which the first reinforcement portion 340 is provided significantly reduces the bending deviation compared to the related art, thereby ensuring the stability of the camera actuator.

Meanwhile, referring to FIG. 14, FIG. 14A shows an amount of bending deviation for the related art, and FIG. 14B shows an amount of bending deviation of the camera actuator according to the embodiment of the present invention.

Here, since the second lens assembly 300 has been compared above through FIGS. 12 and 13, the bending deviation of the third lens assembly 400 will be described through FIGS. 14 and 15.

First, as shown in FIG. 14, the camera actuator according to the related art has a deviation in which an upper portion of the second extension portion 420 in the optical axis direction is bent outward as shown in Fig. 14A, and this may cause a change in length of the second extension portion 420 in the optical axis direction.

In addition, a portion where a large amount of bending occurs places a burden on a portion supporting the third lens group 401 of the third lens assembly 400, and as a result, a bending phenomenon occurring in the second extension portion 420 may become more severe.

However, the camera actuator according to the embodiment of the present invention, as shown in FIG. 14B, has the load concentrated near the third lens group 401 compared to the camera actuator according to the related art shown in FIG. 14A, and may have relatively less bending deviation due to the third barrel portion 410 that holds the third lens group 401.

Accordingly, as described above, the frictional deviation of the second ball units 430 may be reduced, and there may be an advantage in that problems such as overload or wear caused by this may also be prevented.

Meanwhile, FIG. 15 is a graph showing the position of the third lens assembly 400 or the second lens assembly 300 in the optical axis direction as the X-axis and the resulting bending as the Y-axis.

In addition, Tele means that the second lens assembly 300 and the third lens assembly 400 are adjacent, and Wide means that the second lens assembly 300 and the third lens assembly 400 are relatively far apart in the optical axis direction, and this may be described as follows.

Here, it can be confirmed that the bending of (A) according to the related art is relatively larger overall than that of (B) according to the embodiment of the present invention, and this is the same for both cases including Tele and Wide, and it can be confirmed that the deviation is relatively smaller in Tele than in Wide, but the deviation increases in Wide.

Accordingly, the camera actuator according to the embodiment of the present invention may secure the performance, stability, and the like of the camera actuator provided with the first reinforcement portion 340 and the second reinforcement portion 440 more effectively than the camera actuator according to the related art.

The preferred embodiments of the invention have been described and it will be clear to those skilled in the art that the invention may be embodied in other specific forms in addition to the embodiments described above without departing from the spirit or the scope thereof.

Therefore, the above-described embodiments should be considered as illustrative rather than restrictive, and accordingly, the present invention is not limited to the above description but may be modified within the scope of the appended claims and the equivalents thereof.

## Claims

1. A camera actuator comprising:
a housing;
a first lens assembly and a second lens assembly that are disposed inside the housing and arranged in an optical axis direction; and
a driving unit configured to move the second lens assembly in the optical axis direction,
wherein the driving unit includes a first magnet disposed on the second lens assembly and a first coil disposed to face the first magnet,
a first reinforcement portion protruding in a first direction that faces the first magnet is disposed in the second lens assembly, and
the first direction is perpendicular to the optical axis direction.

2. The camera actuator of claim 1, wherein the first reinforcement portion includes a first member extending in one direction and a second member intersecting the first member.

3. The camera actuator of claim 2, wherein the first member extends in the optical axis direction,
the second member extends in a second direction, and
the second direction is perpendicular to the optical axis direction and the first direction.

4. The camera actuator of claim 3, wherein a thickness of a first intersection portion of the second member that is close to the first member in the optical axis direction is greater than a thickness of the second member that is relatively far from the first intersection portion in the optical axis direction.

5. The camera actuator of claim 1, wherein the second lens assembly includes a second lens group, a second barrel portion surrounding the second lens group, and a first extension portion extending from the second barrel portion in the first direction.

6. The camera actuator of claim 5, wherein a first holding portion configured to hold the first magnet is disposed between the first magnet and the first extension portion.

7. The camera actuator of claim 6, wherein the first reinforcement portion is disposed between the first holding portion and the first extension portion.

8. The camera actuator of claim 6, wherein a first fixing portion configured to fix the first holding portion is disposed in the first extension portion.

9. The camera actuator of claim 8, wherein the first fixing portion includes a first protruding member and a second protruding member disposed spaced apart from each other in the optical axis direction, and
the first protruding member surrounds an upper end of the first holding portion in the optical axis direction.

10. The camera actuator of claim 9, wherein the second protruding member surrounds a part of a lower end of the first holding portion in the optical axis direction.

11. The camera actuator of claim 1, further comprising a third lens assembly arranged with the first lens assembly and the second lens assembly in the optical axis direction,
wherein the driving unit includes a second magnet disposed on the third lens assembly and a second coil disposed to face the second magnet, and
a second reinforcement portion protruding in the first direction that faces the second magnet is disposed in the third lens assembly.

12. The camera actuator of claim 11, wherein the second reinforcement portion includes a third member extending in one direction and a fourth member intersecting the third member.

13. The camera actuator of claim 12, wherein the third member extends in the optical axis direction,
the fourth member extends in a second direction, and
the second direction is perpendicular to the optical axis direction and the first direction.

14. The camera actuator of claim 13, wherein a thickness of a second intersection portion of the fourth member that is close to the third member in the optical axis direction is greater than a thickness of the fourth member that is relatively far from the second intersection portion in the optical axis direction.
